# EUROPÄISCHE PATENTSCHRIFT

(11) **EP 2 183 661 B1**
(45) Veröffentlichungstag und Bekanntmachung des Hinweises auf die Patenterteilung: **11.04.2018**
(21) Anmeldenummer: 08785022.8
(22) Anmeldetag: 10.07.2008
(51) Int. Cl.: G06F 3/044, G06F 3/041, B60K 35/00, B60K 37/06

(54) **VERFAHREN ZUR BESTIMMUNG DER POSITION EINES BETÄTIGUNGSELEMENTS, INSBESONDERE EINES FINGERS EINES NUTZERS, IN EINEM KRAFTFAHRZEUG UND POSITIONSBESTIMMUNGSVORRICHTUNG**
METHOD FOR DETERMINING THE POSITION OF AN ACTUATION ELEMENT, IN PARTICULAR A FINGER OF A USER, IN A MOTOR VEHICLE AND POSITION DETERMINATION DEVICE
PROCÉDÉ POUR DÉTERMINER LA POSITION D'UN ÉLÉMENT D'ACTIONNEMENT, EN PARTICULIER LE DOIGT D'UN UTILISATEUR, DANS UN VÉHICULE AUTOMOBILE ET DISPOSITIF POUR DÉTERMINER LA POSITION

(30) Priorität: 19.07.2007 DE 102007034273
(43) Veröffentlichungstag der Anmeldung: 12.05.2010
(73) Patentinhaber: Volkswagen Aktiengesellschaft, 38440 Wolfsburg (DE)
(72) Erfinder: BACHFISCHER, Katharina, 40476 Düsseldorf (DE); WÄLLER, Christoph, 38102 Braunschweig (DE); BENDEWALD, Lennart, 38442 Wolfsburg (DE); VIKOLER, Peter, 39042 Brixen (DE)
(74) Vertreter: Patentanwälte Bressel und Partner mbB
(86) Internationale Anmeldenummer: PCT/EP2008/006069
(87) Internationale Veröffentlichungsnummer: WO 2009/010308

(56) Entgegenhaltungen:
- EP-A- 1 335 318
- WO-A-2004/078536
- WO-A-2005/121938
- WO-A-2006/115946
- US-A1- 2005 041 018
- US-B1- 6 373 474

## Beschreibung

Die Erfindung betrifft ein Verfahren zum Bestimmen der Position eines Betätigungselements, insbesondere eines Fingers, eines Nutzers in einem Kraftfahrzeug bei einer Annäherung an eine Fläche mit den Merkmalen des Oberbegriffs des Patentanspruchs 1 sowie eine Positionsbestimmungsvorrichtung mit den Merkmalen des Oberbegriffs des Patentanspruchs 10. Im Stand der Technik ist es bekannt, die Position eines Betätigungselements, beispielsweise eines Fingers, eines Nutzers berührungslos zu ermitteln. Hierzu ist vorgesehen, dass über einen Signalgeber ein hochfrequentes Gebersignal erzeugt wird. Dieses wird in einen Nutzer, der auf einem Fahrzeugsitz sitzt, kapazitiv eingekoppelt. Die Anordnung des Signalgebers ist daher bevorzugt an dem Fahrzeugsitz vorgesehen. Um eine Annäherung eines Fingers des Nutzers an eine Fläche erfassen zu können, sind an oder um die Fläche herum Sensoren angeordnet. Nähert sich der Finger diesen Sensoren, so ändert sich eine Kapazität in dem Signalkreis aus Signalgeber, Nutzer, Sensoren, die wiederum über das Fahrzeug mit dem Signalgeber verbunden bzw. gekoppelt sind. Die Änderung der Kapazität, die als eine Änderung einer empfangenen Signalstärke des über den Körper des Nutzers übertragenen Gebersignals aufgefasst werden kann, ist ein Maß für einen Abstand des Fingers des Nutzers von dem entsprechenden Sensor. Andere Sensorsysteme können nach anderen Prinzipien ausgebildet sein, in jedem Falle wird jedoch eine Signalstärke des über den Nutzer übertragenen HF-Signals ausgewertet. Anhand der bekannten Positionen der Sensoren und den einzelnen Sensorsignalen, die jeweils ein Maß für eine Entfernung des Körperteils von dem entsprechenden Sensor angeben, kann über eine Triangulation die Position des Körperteils bestimmt werden.
Die grundlegenden Prinzipien einer solchen HF-Signalübertragung über den Körper eines Nutzers in einem Kraftfahrzeug zur berührungslosen Detektion einer Annäherung eines Körperteils sind in der WO 2004/078536 beschrieben.
Aus der WO 2005/121938 A2 ist ein Benutzereingabesystem bekannt, bei dem eine Ausgabe eines kapazitiven Objekterkennungssystems mit einer Ausgabe eines Touchscreens kombiniert wird. Eine Ausgabe des Benutzereingabesystems kann eine Positionsinformation des kapazitiven Objekterkennungssystems und Hinweise auf Berührungen des Touchscreens umfassen. Eine weitere Möglichkeit ist, dass von dem kapazitiven Objekterkennungssystem erfasste Sensorsignale in Kombination mit Positionsinformationen des Touchscreens verarbeitet werden, um Parameter zu aktualisieren, welche von einem Algorithmus zur Bestimmung der Positionsinformation aus weiteren Sensorsignalen der kapazitiven Objekterkennungssystem verwendet werden.

Aus der EP 1 335 318 A2 ist ein kapazitives Touchscreen bekannt, bei dem ein Handschatten durch Erfassen und Verarbeiten einer Historie von Sensordaten vor, bei und nach einer Berührung des Touchscreens korrigiert wird.

Aus der US 2005/0041018 A1 ist ein Touchscreen mit resitiven Sensoren bekannt, wobei eindimensionale Verzerrungen mittels eine Korrekturskalars korrigiert werden.

Weitere berührungsempfindliche Erfassungsvorrichtungen sind aus der US 6 373 474 B1 und der WO 2006/115946 A2 bekannt.

Positionsbestimmungseinheiten werden in Kraftfahrzeugen häufig im Zusammenhang mit Anzeige- und Bedienvorrichtungen verwendet, die in einer Mittelkonsole zwischen einem Fahrersitz und einem Beifahrersitz angeordnet sind. Insbesondere werden die Positionsbestimmungseinheiten mit solchen Anzeige- und Bedienvorrichtungen verwendet, die eine Anzeigefläche umfassen. Die Positionsbestimmungseinheit wird dann verwendet, um eine Annäherung eines Fingers eines Nutzers relativ zu der Anzeigefläche zu bestimmen. Aufgrund der Anordnung zwischen dem Fahrersitz und dem Beifahrersitz erfolgt eine Annäherung des Fingers jedoch in der Regel nicht senkrecht zur Anzeigefläche. Vielmehr erfolgt die Annäherung in den meisten Fällen unter einem schrägen Winkel. Da die Sensoren um die Anzeigefläche herum oder beabstandet von dieser um diese herum angeordnet sind, ist nicht immer der Finger das Körperteil, welches einem der Sensoren am nächsten benachbart ist.

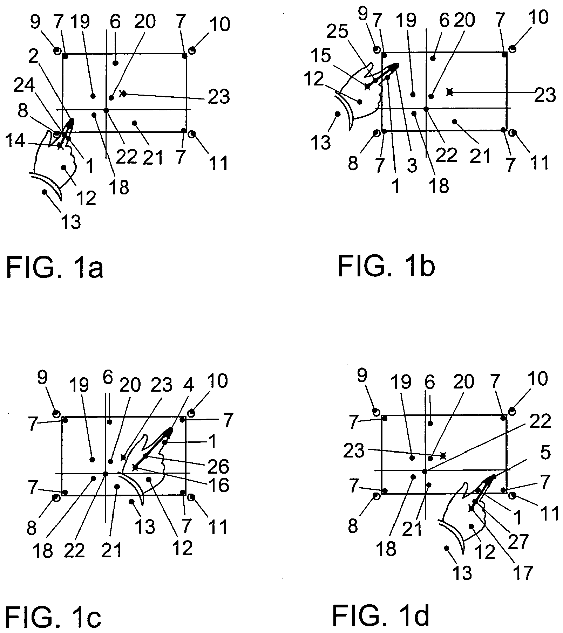

In Fig. 1a bis 1d sind vier Situationen gezeigt, in denen ein Nutzer jeweils seinen rechten Zeigefinger 1 an unterschiedliche Berührpositionen 2-5 einer als Touchscreen ausgebildeten Anzeigefläche 6 annähert, die rechts vor ihm angeordnet ist. Um die Anzeigefläche 6 sind jeweils an Eckpunkten 7 Sensoren 8-11 angeordnet. Bei der Berührsituation nach Fig. 1a, bei der der Nutzer mit dem rechten Zeigefingerfinger 1 die in der linken unteren Ecke befindliche Berührposition 2 berührt, wird keiner der Sensoren 8-11 durch ein anderes Körperteil in nennenswerter Weise störend beeinflusst.

Bei einer Annäherung des rechten Zeigefingers 1 an die in der linken oberen Ecke der Anzeigefläche 6 befindliche Berührposition 3 wird jedoch der an der linken unteren Ecke angeordnete Sensor 8 durch eine Hand 12 und einen Unterarm 13 des Nutzers mit beeinflusst.

Bei der Situation nach Fig. 1c, bei der der Nutzer den rechten Zeigefinger 1 an die in der rechten oberen Ecke angeordnete Berührposition 4 annähert, wird der in der linken unteren Ecke angeordnete Sensor 8 durch die Hand 12 und den Unterarm 13 stark beeinflusst.

In der Situation, die in Fig. 1d dargestellt ist, bei der der rechte Zeigefinger 1 des Nutzers an die in der unteren rechten Ecke befindliche Berührposition 5 angenähert wird, werden die Sensoren 8 und 11, die an der linken unteren Ecke und der rechten unteren Ecke entsprechend angeordnet sind, durch die Hand 12 und den Unterarm 13 mit beeinflusst. Daher führt eine durchgeführte Triangulation anhand der Sensorsignale häufig nicht zur korrekten Positionsbestimmung des zur Berührung genutzten rechten Zeigefingers 1.

Der Erfindung liegt daher das technische Problem zugrunde, dass die Positionsbestimmung im Stand der Technik nicht befriedigend gelöst ist. Aufgabe der Erfindung ist es daher, eine verbesserte Positionsbestimmungsvorrichtung und ein verbessertes Verfahren zur Positionsbestimmung eines Betätigungselements, insbesondere eines Fingers, eines Nutzers in einem Kraftfahrzeug bei Annäherung an eine Fläche zu schaffen.
Die Aufgabe wird erfindungsgemäß durch ein Verfahren mit den Merkmalen des Patentanspruchs 1 sowie eine Vorrichtung mit den Merkmalen des Patentanspruchs 10 geschaffen. Vorteilhafte Ausgestaltungen der Erfindung ergeben sich aus den Unteransprüchen.
Die Erfindung beruht auf dem Grundgedanken, dass anhand der Sensorsignale, die ein Maß für eine Entfernung des Sensors von einem Objekt, beispielsweise einem Körperteil, sind, in einem ersten Schritt lediglich eine Schwerpunktposition des Objekts (beispielsweise des Körperteils) ermittelt wird, das an diese Fläche angenähert wird. Diese Schwerpunktposition weicht von der Position des Betätigungselements, beispielsweise der Position des Fingers, ab. Die Abweichung zwischen der Schwerpunktposition und der Position des Betätigungselements (beispielsweise der Fingerposition) ist wiederum von der ermittelten Schwerpunksposition abhängig. Dies beruht darauf, dass die Objekthaltung oder Handhaltung sich zum einen abhängig von der Schwerpunktposition verändert, und zum anderen darauf, dass die bei der Ermittlung der Schwerpunktposition berücksichtigten Teile des Objekts (des Körpers) unterschiedlich sind. Bei der in Fig. 1c dargestellten Annäherungssituation geht beispielsweise ein größerer Abschnitt des Unterarms in eine Schwerpunktpositionsermittlung ein als bei der Situation nach Fig. 1b oder 1d. Neben einem Finger oder einem anderen Körperteil kommen auch von dem Nutzer geführte Gegenstände, die fest mit dem Körper verbunden sind als Betätigungselemente in betracht. Insbesondere ist es möglich, dass der Nutzer Bekleidungsstücke, beispielsweise Handschuhe trägt. Ebenso kann der Nutzer ein Element, beispielsweise einen Stift oder Stab in einer Hand halten. Hierbei ist davon auszugehen, dass der Nutzer einen solchen Stift oder Stab jeweils gleich hält, wenn er diesen als Betätigungselement nutzt. Als Objekt ist in einem solchen Falle nicht der Körperteil allein sondern der Körperteil in Verbindung mit dem Betätigungselement anzusehen. Das Objekt umfasst somit immer ein Körperteil und gegebenenfalls zusätzlich ein "körperfremdes" Betätigungselement anstatt eines "körpereigenen" Betätigungselements. Erfindungsgemäß wird somit ein Verfahren vorgeschlagen, das folgende Schritte umfasst: Erfassen von Sensorsignalen berührungslos messender Sensoren, wobei die Sensorensignale ein Maß für einen Abstand eines Objektes, insbesondere eines Körperteils des Nutzers von einer entsprechenden Sensorposition sind und Ermitteln der Position des Betätigungselements (Fingers) anhand von Sensorsignalen der Sensoren, wobei anhand der Sensorsignale zunächst eine Schwerpunktposition des sich mit dem Betätigungselement (Finger) annähernden Objekts (Körperteils) ermittelt wird, und unter Berücksichtigung der Schwerpunktposition die Position des Betätigungselements (Fingers) errechnet wird. Vorteil dieses Verfahrens ist es, dass die Position des Betätigungselements (Fingers) wesentlich genauer bestimmt werden kann. Hierdurch kann die genauer bestimmte Position des Betätigungselements (Fingers) besser verwendet werden, um eine auf der Anzeigefläche angezeigte Benutzerschnittstelle zu beeinflussen. Beispielsweise kann eine Berührposition während der Annäherung besser antizipiert werden. Somit können beispielsweise die in dem Bereich der antizipierten Berührposition befindlichen Bedienelemente für eine Auslösung durch eine Berührung vergrößert dargestellt werden, um eine Trefferwahrscheinlichkeit des Nutzers zu erhöhen. Eine genauer bekannte Position des Betätigungselements (Fingers) kann auch auf andere Weise zur Steuerung einer Benutzerschnittstelle vorteilhaft verwendet werden. Beispielsweise kann ein Verschieben von Elementen, ein Vergrößern und/oder Verkleinern usw. von der jeweiligen Position des Betätigungselements (der jeweiligen Fingerposition) abhängig ausgestaltet sein. Außerdem können unterschiedliche Aktionen in Abhängigkeit von der ermittelten Position des Betätigungselements (Fingers) ausgelöst werden.
Erfindungsgemäß erfolgt eine Ermittlung der Position des Betätigungselements (der Fingerposition) ausgehend von der Schwerpunktposition dadurch, dass die Position des Betätigungselements (Fingers) ausgehend von der Schwerpunktposition unter Berücksichtigung eines von der Schwerpunktposition abhängigen Versatzes ermittelt wird. Wie bereits oben angedeutet wurde, ist eine Abweichung der tatsächlichen Position des Betätigungselements (der tatsächlichen Fingerposition) von einer Objekthaltung (Handhaltung) sowie von der Stärke der Beeinflussung der einzelnen Sensoren durch die Hand und einen Unterarm usw., d.h. einer Ausgestaltung des Objekts, abhängig. Ein Versatz zwischen Schwerpunktposition und Betätigungselementposition (Fingerposition) variiert somit abhängig von der Schwerpunktposition. Durch die Berücksichtigung des veränderlichen, von der Schwerpunktposition abhängigen Versatzes erhält man somit die korrekte Position des Betätigungselements (die korrekte Fingerposition).
Bei einer Ausführungsform ist vorgesehen, dass das Erfassen der Sensorsignale folgende Schritte umfasst: Erzeugen eines HF-Signals; Einkoppeln des HF-Signals in den Nutzer; Übertragen des HF-Signals über den Körper des Nutzers ; Empfangen des über den Körper und das Betätigungselement (den Finger) des Nutzers übertragenen HF-Signals mittels der mehreren Sensoren, wobei die Sensorsignale jeweils ein Maß für die empfangene Signalstärke des HF-Signals sind. Es können jedoch auch andere Sensoren, die beispielsweise eine kapazitive Änderung in einem Bereich vor einem Bildschirm erfassen, verwendet werden. Solche "Sensoren" können beispielsweise durch durchsichtige Leiterbahnen, die vorzugsweise gekreuzt vor einer als Touchscreen ausgebildeten Anzeigevorrichtung angeordnet sind, gebildet sein. Eine solche Anordnung umfasst eine Vielzahl von "Sensoren", die Sensorsignale liefern. Andere berührungslos messende Sensoren arbeiten ultraschallbasiert oder verwenden optische Verfahren. Solche nach einem optischen Verfahren arbeitende Sensoren können beispielsweise jeweils gemäß folgendem Prinzip ausgestaltet sein: Eine Sende-LED strahlt ein rechteckförmig amplitudenmoduliertes Lichtsignal im optischen oder infraroten Wellenlängenbereich ab. Das an einem Objekt reflektierte Lichtsignal wird von einer Photodiode erfasst. Von einer Kompensations-LED wird ein um 180° phasenversetztes ebenfalls rechteckförmig amplitudenmoduliertes Referenzlichtsignal zu der Photodiode über einen unveränderlichen Lichtweg gesandt. Die Kompensations-LED wird über einen Regelkreis mittels eines Regelsignals so ausgeregelt, dass sich das empfangene reflektierte Lichtsignal der Sende-LED und das empfangene Referenzlichtsignal der Kompensations-LED an der Photodiode aufheben und ein Gleichsignal detektiert wird. Eine Änderung des Regelsignals ist ein Maß für den Abstand des Objekts. Eine nach diesem Prinzip ausgestaltete Sensoreinheit ist weitgehend unabhängig von Temperatur- und Helligkeitsschwankungen.

Bei einer bevorzugten Weiterbildung der Erfindung ist vorgesehen, dass der Raum vor der Fläche, beispielsweise einer Anzeigefläche, in Unterräume unterteilt wird oder ist und jedem Unterraum ein Versatz zugeordnet wird oder ist. Hierdurch kann auf einfache Weise berücksichtigt werden, dass die Handhaltung im Allgemeinen von der angestrebten Berührposition bzw. momentanen Position des Betätigungselements (Fingers) abhängig ist. Je weiter die Berührposition von dem Fahrer seitlich entfernt ist, desto mehr nähert sich beispielsweise seine Handfläche einer parallelen Ausrichtung zu der zu berücksichtigenden Fläche an. Dies bedeutet, dass anhand der ermittelten Schwerpunktposition auf die Handhaltung zurückgeschlossen werden kann. Dieses ermöglicht es genauso, einen Versatz zwischen der Schwerpunktposition und der Betätigungselementposition (Fingerposition) zu ermitteln. Hierdurch wird auf einfache Weise die Positionsbestimmung genauer gemacht. Eine Änderung der Handhaltung ergibt sich auch, wenn der Nutzer einen Stab oder Stift als Betätigungselement in der Hand hält und führt. Die einzelnen den Unterräumen zugewiesenen Versätze können beispielsweise in einer Tabelle abgelegt werden. Eine Bestimmung der Betätigungselementposition (Fingerposition) macht somit lediglich ein Abrufen des entsprechenden Versatzwertes und einer Addition dieses Versatzwertes zu der Schwerpunktposition erforderlich, um die Betätigungselementposition (Fingerposition) zu bestimmen. Bei einer Ausführungsform sind die Versätze in einem Speicher abgelegt und aus dem Speicher abhängig davon auslesbar, in welchem Unterraum die Schwerpunktposition liegt.
Bei einer anderen Ausführungsform der Erfindung ist vorgesehen, dass der Versatz eine Funktion der Schwerpunktposition ist. Bei dieser Ausführungsform ist der Versatz in Abhängigkeit von der Schwerpunktposition parametrisiert und als Funktion hinterlegt. Eine solche Funktion kann beispielsweise mittels einer Interpolation aus unterschiedlichen bestimmten Versätzen für unterschiedliche Schwerpunktpositionen ermittelt werden. Bei einer Ausführungsform ist vorgesehen, dass das Betätigungselementpositionsberechungsmodul ein Versatzberechnungsmodul umfasst, das den Versatz anhand einer Funktion der Schwerpunktposition ermittelt.
Ein anderer Ansatz zur Ermittlung der Betätigungselementposition (Fingerposition) geht davon aus, dass die den Signalstärken zugeordneten Abstände in Abhängigkeit der ermittelten Schwerpunktposition angepasst werden können. Dieses ist gleichbedeutend mit einer Anpassung der Kennlinien der einzelnen Sensoren. Eine bevorzugte Ausführungsform sieht daher vor, dass Zuordnungen der empfangenen Signalstärken zu ermittelten Entfernungen des Betätigungselements (Fingers) von den entsprechenden Sensoren für die Berechnung der Fingerposition jeweils individuell abhängig von der ermittelten Schwerpunktposition angepasst werden.
Dieses Verfahren ermöglicht somit eine zweite präzise Triangulation, bei der die Schwerpunktposition zur Abschwächung (gegebenenfalls auch Verstärkung) einzelner Sensorsignale verwendet wird.
Noch weiter verbessern lässt sich die Bestimmung der Betätigungselementposition (Fingerposition) mit einer Ausführungsform, bei der zusätzlich mindestens eine während der Annäherung zuvor ermittelte Schwerpunktposition in die Ermittlung der Betätigungselementposition (Fingerposition) einbezogen wird bzw. einbeziehbar ist. Durch die Berücksichtigung mehrerer ermittelter Schwerpunktpositionen kann eine Bewegungsrichtung ermittelt werden. Insbesondere bei Ausführungsformen, bei denen eine Zuordnung der empfangenen Signalstärke zu einem Abstand in Abhängigkeit von der ermittelten Schwerpunktposition angepasst wird, ist eine Kenntnis einer Annäherungsrichtung von Vorteil. Für die einzelnen Sensoren können Zuordnungskennlinien für unterschiedliche Annäherungsrichtungen experimentell erfasst und hinterlegt werden. Anhand dieser Zuordnungen kann dann eine sehr präzise Fingerpositionsbestimmung ausgeführt werden. Bei linearen Kennlinien kann dieses zu einer Anpassung der Kennliniensteigung in Abhängigkeit von der Annäherungsrichtung führen.

Bei einer bevorzugten Ausführungsform ist die Fläche, an die das Betätigungselement (der Finger) angenähert wird, ein Touchscreen und wird mittels des Touchscreens eine Berührposition bei einer Berührung des Touchscreens durch das Betätigungselement (den Finger) ermittelt und bereitgestellt. Die Berührposition wird mit der ermittelten Position des Betätigungselements (Fingers) verglichen und anhand einer Abweichung der Versatz und/oder die Zuordnungen der Signalstärken zu den Entfernungen (d.h. die Kennlinien der Sensoren) korrigiert. Hierdurch wird insbesondere eine Anpassung an einen individuellen Nutzer in einem Kraftfahrzeug ermöglicht. Insbesondere auch in solchen Fällen, in denen ein "körperfremdes" Betätigungselement verwendet wird. Bei einer Auslieferung des Fahrzeugs im fabrikneuen Zustand werden als Versatzwerte und Zuordnungen solche verwendet, die für eine Vielzahl von Nutzern akzeptable Positionsbestimmungen liefern. Nutzer, die jedoch eine von der üblichen Sitzposition abweichende Sitzposition bevorzugen, eine besonders kleine oder besonders große Hand aufweisen und/oder ihre Hand und ihren Finger oder ein anderes Betätigungselement auf Bahnkurven an die Fläche annähern, die stark von den üblicherweise verwendeten Bahnkurven abweichen, können mit der Weiterbildung der Erfindung ebenfalls sehr präzise Betätigungselementpositionsermittlungen (Fingerpositionsermittlungen) erhalten. Nach und nach wird so die Positionsbestimmungsvorrichtung bzw. das Verfahren zum Bestimmen der Position des Betätigungselements (Fingers) optimiert und personalisiert.

Als besonders bevorzugte Weiterbildung ist daher vorgesehen, dass der Versatz und/oder die Zuordnungen personenbezogen gespeichert werden. Sofern Identifikationsinformationen des Nutzers erfasst werden können, können somit der Versatz und/oder die Zuordnungen personenbezogen in einem Speicher abgelegt und aus diesem eingelesen werden. Eine Ausführungsform umfasst ein Identifikationsmodul, das Identifikationsinformationen des Nutzers erfassen kann und den Versatz und/oder die Zuordnungen personenbezogen in einem Speicher ablegt oder aus diesem einliest.

Bei einem besonders bevorzugten Verfahren können der Nutzer und ein weiterer Nutzer, beispielsweise ein Fahrer und ein Beifahrer, von der Positionsbestimmungseinheit unterschieden werden. Eine bevorzugte Ausführungsform sieht daher vor, dass eine Positionsbestimmungsvorrichtung einen weiteren Signalgeber zum Erzeugen eines weiteren HF-Signals umfasst, der so angeordnet ist, dass das weitere HF-Signal in einen weiteren Nutzer einkoppelbar ist und die Sensoren oder weitere Sensoren ausgebildet sind, weitere Sensorsignale bereitzustellen, die ein Maß für eine empfangene Signalstärke des über den weiteren Körper und ein weiteres Betätigungselement (einen weiteren Finger) des weiteren Nutzers übertragenen HF-Signals angeben, und wobei anhand der weiteren Sensorsignale zunächst eine weitere Schwerpunktposition des mit dem weiteren Betätigungselement (Finger) angenäherten weiteren Objekts (Körperteils) ermittelbar ist und die weitere Betätigungselementposition (Fingerposition) unter Berücksichtigung der weiteren Schwerpunktposition ermittelbar ist. Für den weiteren Nutzer sind die Versätze bzw. die Zuordnungen entsprechend der unterschiedlichen Position, aus der sich der weitere Nutzer der Fläche annähert, entsprechend verschiedenen von denen des Nutzers. Nähert sich der Nutzer beispielsweise mit seinem linken Zeigefinger von der linken Seite, so entspricht dies im Wesentlichen einer Spiegelung an einer Mittellinie zwischen dem Nutzer und dem weiteren Nutzer. Nähert sich der Nutzer jedoch beispielsweise als Rechtshänder ebenfalls mit seinem rechten Zeigefinger einer links von ihm angeordneten Fläche, so sind grundsätzlich andere Versätze zu berücksichtigen.

Die Merkmale der erfindungsgemäßen Positionsbestimmungsvorrichtung weisen dieselben Vorteile wie die entsprechenden Merkmale des erfindungsgemäßen Verfahrens auf.

Nachfolgend wird die Erfindung anhand bevorzugter Ausführungsbeispiele näher erläutert. Hierbei zeigen:
- Fig. 1a - 1d: unterschiedliche Annäherungssituationen eines rechten Zeigefingers an eine Anzeigefläche, bei der die Sensoren der Positionsbestimmungseinheit benachbart zu den Ecken der Anzeigefläche angeordnet sind;
- Fig. 2: eine schematische Darstellung eines Kraftfahrzeugs mit einer benachbart zu einer Anzeigefläche angeordneten Positionsbestimmungseinheit; und
- Fig. 3a - 3c: unterschiedliche Situationen der Annäherung eines rechten Zeigefingers an eine langgestreckte Anzeigefläche, wobei die Sensoren der Positionsbestimmungseinheit oberhalb der Anzeigefläche angeordnet sind.

Wie oben bereits erläutert ist, sind in Fig. 1a bis 1d vier Situationen dargestellt, in denen der rechte Zeigefinger 1 als Betätigungselement, an unterschiedliche Berührpositionen 2-5 auf der Anzeigefläche 6 angenähert wird. Im Folgenden wird als Betätigungselement jeweils ein Zeigefinger angenommen. Es könnte jedoch auch ein anderer Finger oder ein in der Hand gehaltener und/oder geführter Stift, Stab oder Ähnliches als Betätigungselement verwendet werden. Da die Hand 12 und der Unterarm 13 die einzelnen Sensoren 8-11 in den verschiedenen Situationen unterschiedlich störend beeinflussen, werden von der Positionsbestimmungseinheit anhand der Sensorsignale nicht die korrekten Positionen des rechten Zeigefingers 1, sondern vielmehr jeweils Schwerpunktpositionen 14-17 ermittelt. Wie gut zu erkennen ist, variiert die "Lage" der Schwerpunktposition relativ dem Körperteil (der Hand 12, dem Unterarm 13), das mit dem rechten Zeigefinger 1 an die Anzeigefläche 6 angenährt wird. Dies bedeutet, dass eine Position des rechten Zeigefingers 1 jeweils unterschiedlich gegenüber der ermittelten Schwerpunktposition 14-17 versetzt ist. Nach einer Ausführungsform der Erfindung ist daher vorgesehen, den Raumbereich vor der Anzeigefläche in Unterräume 18-21 zu unterteilen. Die Unterteilung in die vier Unterräume 18-21 ist selbstverständlich nur exemplarisch. Da eine Annäherung in dem dargestellten Beispiel von links unten nach rechts oben erfolgt, ist ein Kontaktpunkt 22 aller vier Unterräume nach links unten bezüglich eines Mittelpunkts 23 der Anzeigefläche 6 bzw. einer Anordnung der Sensoren 8-11 verschoben. Je nachdem, in welchen der Unterräume 18-21 die Schwerpunktposition 14-17 liegt, ist ein unterschiedlicher Versatz 24-27 zu der Schwerpunkposition 14-17 zu addieren, um die Fingerposition zu erhalten, die jeweils mit der entsprechenden Berührposition 2-5 dieser Darstellung übereinstimmt. Die unterschiedlichen Versätze 24-27, die den Unterräumen 18-21 entsprechend zugeordnet sind, können beispielsweise in einem Speicher abgelegt sein und von dort in Abhängigkeit von der ermittelten Schwerpunktposition 14-17 abgerufen werden.

Es ergibt sich für den Fachmann, dass eine Unterteilung des Raums vor der Fläche, d.h. der Anzeigefläche 6, entsprechend den tatsächlich vorkommenden Annäherungssituationen angepasst unterteilt werden kann. Selbstverständlich können mehr Unterräume oder auch weniger Unterräume verwendet werden. In dem dargestellten Beispiel ist der Unterraum lediglich in vier Unterräume 18-21 unterteilt. Eine Unterteilung des Raums auch senkrecht zu der Anzeigefläche 6 ist selbstverständlich sinnvoll, um die unterschiedlich starke Beeinflussung der einzelnen Sensoren 8-11 in Abhängigkeit von der Entfernung der sich annähernden Körperteile angemessen zu berücksichtigen. Dies bedeutet, dass nicht nur die laterale Position des rechten Zeigefingers, der Hand 12 und des Unterarms 13, sondern auch deren senkrechter Abstand zu der Anzeigefläche 6 von Bedeutung ist.

Bei einer alternativen Ausführungsform ist es möglich, eine Versatzfunktion aufzustellen, die von der Schwerpunktposition abhängig ist.

Dieses ist mehr oder weniger gleichbedeutend mit einer sehr kontinuierlichen Unterteilung, d.h. sehr feinen Unterteilung des Raums quasi in Unterpunkte.

Besonders vorteilhaft ist es, wenn eine Berührposition, die von einer als Touchscreen ausgebildeten Anzeigefläche bereitgestellt wird, mit der ermittelten Fingerposition verglichen wird, um die einzelnen Versätze zu korrigieren. Hierdurch ist es möglich, die für die einzelnen Unterbereiche bzw. ermittelten Schwerpunktpositionen benötigten Versätze personenbezogen anzupassen und vorzugsweise abzuspeichern. Kann das Positionsbestimmungssystem eine Personenidentifikation erfassen, die beispielsweise in einem personenbezogenen Fahrzeugschlüssel abgelegt ist, so können die einzelnen Versatzdaten personenbezogen gespeichert werden. In dem Fahrzeug können somit unterschiedliche Sätze an Versätzen für die einzelnen Personen hinterlegt sein, die beispielsweise einen durch eine Identifikationsnummer personalisierten Fahrzeugschlüssel besitzen und beim Betreiben des Fahrzeugs verwenden.

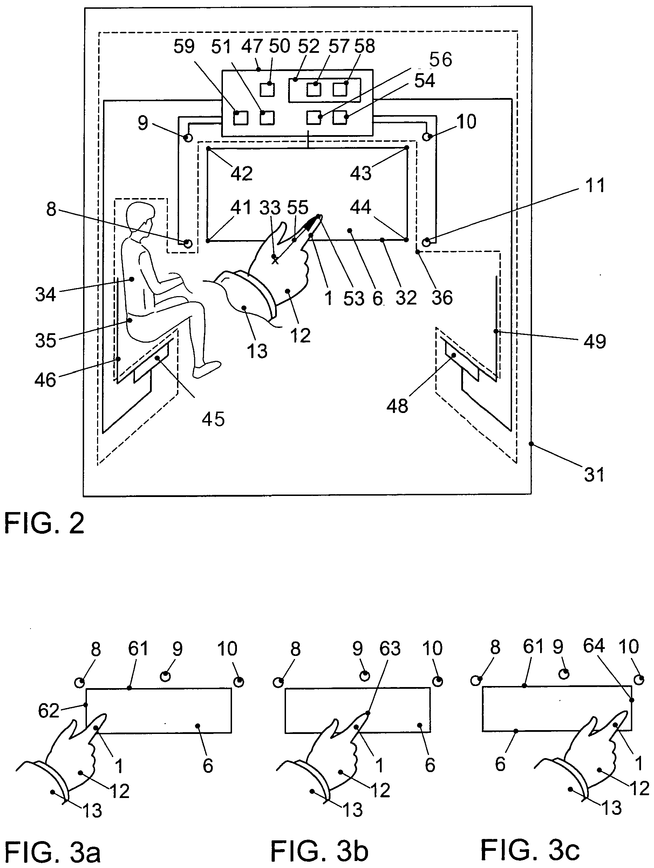

In Fig. 2 ist schematisch ein Innenraum eines Kraftfahrzeug 31 dargestellt. In einer Mittelkonsole ist ein als Touchscreen ausgebildetes Bedienelement 32 angeordnet. Auf einer frei programmierbaren Anzeigefläche 6 können einerseits Informationen für einen Nutzer 34 ausgegeben werden. Andererseits können auf der frei programmierbaren Anzeigefläche 6 so genannte virtuelle Bedienelemente angezeigt werden, die der Nutzer 34 über eine Berührung mit einem Betätigungselement, hier einem rechten Zeigefinger 1, auslösen und/oder betätigen kann. Das Betätigungselement wird in der Regel ein Finger des Nutzers sein. Um eine Position des Fingers 1 in einem Raum vor dem Bedienelement 32, d.h. einem überwachten Volumen vor der Anzeigefläche 6, erfassen zu können, ist eine berührungslos messende Positionsbestimmungsvorrichtung 36 vorgesehen. Die Positionsbestimmungsvorrichtung 36 umfasst Sensoren 8-11, die benachbart zu Ecken 41-44 der Anzeigefläche 6 angeordnet sind. Diese Sensoren 8-11 empfangen ein Hochfrequenzsignal, das über den Nutzer 34 und dessen Betätigungselement, den Zeigefinger 1, übertragen wird und in die Sensoren 8-11 kapazitiv eingekoppelt wird. Das übertragene Hochfrequenzsignal, welches Gebersignal genannt wird, wird von einem Signalgeber 45 erzeugt, der in einen Fahrersitz 46 integriert ist. Das mit einem Sendepegel erzeugte Gebersignal wird kapazitiv in den auf dem Fahrersitz 46 sitzenden Nutzer 34 eingekoppelt, über den Körper 35 des Nutzers 34 und dessen Unterarm 13, Hand 12 und Zeigefinger 1 übertragen und kapazitiv in die Sensoren 8-11 eingekoppelt. Die Sensoren stellen jeweils ein Sensorsignal zu Verfügung, das eine Information über eine empfangene Signalstärke umfasst. Die einzelnen Sensoren 8-11 sind mit einer Auswerte- und Steuereinheit 47 verbunden, die anhand der Sensorsignale eine Position des Zeigefingers 1 im Raum vor der Anzeigefläche 6 ermittelt. Hierbei wird ausgenutzt, dass die empfangenen Signalstärken jeweils ein Maß für den Abstand des Zeigefingers 1 von dem entsprechenden Sensor 8-11 sind. Die Position des Fingers 1 wird ermittelt in dem zunächst über eine Triangulation eine Schwerpunktposition der mit dem Finger 1 angenäherten Körperteile (der Hand 12 und dem Unterarm 13) bestimmt wird. Hierzu verfügt die Auswerte- und Steuereinheit 47 über ein Schwerpunktpositionsermittlungsmodul 50.
In einem Speicher 51 sind einzelnen Unterräumen zugeordnete Versätze abgelegt. Ein Betätigungselementpositionsberechnungsmodul 52, das auch Fingerpositionsberechnungsmodul genannt wird, ermittelt den Unterraum, in dem sich die Schwerpunktposition 33 befindet. Der diesem Unterraum zugeordnete Versatz 55 wird aus dem Speicher 51 abgerufen oder ausgelesen und zu der Schwerpunktposition 33 addiert um die Fingerposition 53 zu erhalten. Es versteht sich, dass der Versatz in der Regel durch einen dreidimensionalen Vektor darstellbar ist.
Berührt der Finger 1 die Anzeigefläche 6, so stellt diese, wenn die Anzeigefläche 6 als Touchscreen ausgebildet ist, eine Berührpositionsinformation bereit. Ein Vergleichsmodul 54 ermittelt eine gegebenenfalls vorhandene Abweichung der Berührposition von der ermittelten Fingerposition. Liegt eine Abweichung vor so wird der Versatz 55 mittels eines Korrekturmoduls 56 entsprechend angepasst. Es kann vorgesehen sein, das der Versatz 55 nur korrigiert wird, wenn eine Abweichung oberhalb einer vorgegebenen Schwelle vorliegt.
Um auch ein weiteres Betätigungselement, einen weiteren Finger, eines weiteren Nutzers, beispielsweise eines Beifahrers (nicht dargestellt), erfassen zu können, umfasst die Positionsbestimmungsvorrichtung 36 der dargestellten Ausführungsform einen weiteren Signalgeber 48, der in den Beifahrersitz 49 integriert ist. Der weitere Signalgeber 48 erzeugt vorzugsweise ein Hochfrequenzsignal, welches eine andere Frequenz aufweist oder ein gegenüber dem Gebersignal unterschiedlich moduliertes Hochfrequenzsignal darstellt.
Der Signalgeber 45 und der weitere Signalgeber 48 können auch an anderen Stellen im Kraftfahrzeug angeordnet sein. Eine kapazitive Einkopplung des Gebersignals bzw. weiteren Gebersignals ist jedoch besonders einfach möglich, indem beispielsweise leitende Matten in die Sitzfläche eingearbeitet werden.

Für den weiteren Nutzer werden andere Versätze verwendet, die in der Regel anderen Unterräumen zugeordnet sind. Ansonsten kann die Ermittlung der weiteren Fingerposition des weiteren Fingers analog ausgeführt werden.
Bei einer anderen Ausführungsform ist vorgesehen, dass das
Betätigungselementpositionsberechnungsmodul die Fingerposition anhand eines von der Schwerpunktposition 33 abhängigen Versatzes berechnet, der seinerseits mittels eines Versatzberechnungsmoduls 57 anhand einer Funktion der Schwerpunktposition 33 errechnet ist. Hierdurch ist es möglich, eine sehr feine Unterteilung des Raums quasi in Unterpunkte vorzunehmen.
Die Funktion kann anhand interpolierter Versätze parametrisiert sein, die aus einzelnen vermessenen Schwerpunktpositionen und Fingerpositionen abgeleitet sind.
Es ist ebenfalls möglich, einzelnen Parameter der Funktion anpassbar auszugestalten, so dass festgestellte Abweichungen zwischen der Berührposition und der ermittelten Fingerposition zur Anpassung der Funktion zur Berechnung des Versatzes verwendet werden können.
Bei wieder einer anderen Ausführungsform ist vorgesehen, dass das Betätigungselementpositionsberechnungsmodul ausgebildet ist, die Fingerposition mittels Triangulation zu bestimmen, wobei jedoch mittels eines Zuordnungsmoduls 58 eine Zuordnung einer empfangenen Signalstärke zu einer Entfernung abhängig von der ermittelten Schwerpunktposition oder sogar abhängig von einer Annäherungsrichtung für jeden der Sensoren angepasst wird. Die Annäherungsrichtung des Fingers kann unter Berücksichtigung mindestens einer vorausgehend ermittelten Schwerpunktposition abgeleitet werden. Ebenso ist es möglich die Annäherungsrichtung anhand zuvor ermittelter Fingerpositionen zu ermitteln. Allgemein kann die Annäherungsrichtung anhand zuvor ermittelter Positionen bestimmt werden. Eine Anpassung der Zuordnung empfangene Signalstärke zu Entfernung entspricht einer Anpassung der Kennlinie eines Sensors. Ist diese Kennlinie linear, so kann beispielsweise eine Änderung der Zuordnung in einer Anpassung der Geradensteigung bestehen. Für unterschiedliche Annäherungsrichtungen können beispielsweise unterschiedliche Kennlinien erfasst werden und in dem Speicher abgelegt werden. Sind die Kennlinien (Zuordnungen empfangene Signalstärke Entfernung) parametrisierbar, so können sie in Form von Formeln abgelegt sein. Ansonsten ist es möglich die Kennlinien in Tabellenform abzulegen, wobei in vielen Fällen lediglich einzelnen Wertepaare empfangene Signalstärke - Entfernung abgelegt zu werden brauchen. Die Zwischenwerte können in der Regel interpoliert werden. Das Betätigungselementpositionsberechnungsmodul errechnet die Fingerposition anhand der individuell angepassten Zuordnungen aus den Sensorsignalen über eine Triangulation.

Auch bei dieser Ausführungsform können Abweichungen zwischen der gemessenen Berührposition und der ermittelten Fingerposition verwendet werden, um in diesem Falle die Zuordnungen anzupassen.

Die zur Fingerpositionsberechnung benötigten Informationen können jeweils nutzerbezogen in dem Speicher abgelegt sein, sofern ein Identifikationsmodul 59 der Positionsbestimmungseinheit den Nutzer, beispielsweise anhand einer in einem Fahrzeugschlüssel codierten Identifikationsnummer identifizieren kann, die der Positionsbestimmungseinheit übermittelt wird.

Für den Fachmann versteht es sich, dass die einzelnen beschriebenen Module der Auswerte- und Steuereinheit sowohl in Software als auch in Hardware oder in einer Kombination hieraus umgesetzt sein können. Die Auswerte- und Steuereinheit kann insbesondere eine Rechnereinheit umfassen, die einen in dem Speicher abgelegten Programmcode ausführen kann. Die einzelnen Module können dann als Programmcodemodule umgesetzt sein. Es ergibt sich ferner, dass eine scharfe Abgrenzung der Funktionalität der einzelnen Module häufig nicht möglich ist und dass diese teilweise oder ganz zusammengefasst sein können.

Die unterschiedlichen Bestandteile der Positionsbestimmungseinheit können verteilt im Kraftfahrzeug angeordnet sein. Sie können ebenfalls in eine oder mehrere Komponenten integriert sein. Die Auswerte- und Steuereinheit kann insbesondere in ein zentrales Steuergerät und/oder ein Multifunktionsbediengerät, in das auch die oben erwähnte Anzeigefläche integriert ist, integriert sein.

In Fig. 3a bis 3c sind weitere Situationen dargestellt, in denen ein Zeigefinger 1 einer langgestreckten Anzeigefläche 6 angenähert wird. In diesem Fall sind Sensoren 8-10 entlang einer oberen Kante 61 der Anzeigefläche 6 angeordnet. Bei der Situation (siehe Fig. 3a), in der der Zeigefinger einer Position am linken Rand 62 der Anzeigefläche 6 angenähert wird, wird keiner der Sensoren 8-10 durch die Hand 12 oder den Unterarm 13 nennenswert gestört. In Fig. 3b ist die Situation dargestellt, in der der Finger 1 einer Berührposition 63 in einer Mitte der Anzeigefläche 6 angenähert wird. In dieser Situation wird der Sensor 8, der an der linken oberen Ecke der Anzeigefläche 6 angeordnet ist, durch die Hand 12 und den Unterarm 13 mit beeinflusst, so dass eine ermittelte Schwerpunktposition von der tatsächlichen Fingerposition abweicht. Bei der Situation nach Fig. 3c, bei der der Zeigefinger 1 einem rechten Rand 64 der Anzeigefläche 6 angenähert wird, werden die Sensoren 8 und 9, die an der linken oberen Ecke bzw. mittig oberhalb der oberen Kante 61 der Anzeigefläche 6 angeordnet sind, durch die Hand 12 und den Unterarm 13 mit beeinflusst, so dass ein ermittelter Schwerpunkt deutlich von der Fingerposition abweicht. Je nach ermittelter Schwerpunktposition kann ein entsprechend zugeordneter Versatz verwendet werden, um die korrekte Fingerposition zu berechnen, wie dies oben beschrieben ist. Alternativ können die Kennlinien, d.h. die Zuordnungen der empfangenen Signalstärke zu einer entsprechenden Entfernung, angepasst werden, um die Fingerposition direkt mittels Triangulationsverfahren zu ermitteln.

Die Ausführungsbeispiele verwenden zwar Sensoren, die über den menschlichen Körper übertragene HF-Signale erfassen, es können jedoch auch beliebige andere Sensoren genutzt werden, die berührungslos eine Annäherung eines Objekts an eine Fläche erfassen können und hierbei ein Sensorsignal erzeugen, welches ein Maß für den Abstand des Objekts von dem Sensor ist. Insbesondere können die oben erwähnten Sensoren verwendet werden.

### Bezugszeichenliste

- 1: Zeigefinger
- 2-5: Berührpositionen
- 6: Anzeigefläche
- 7: Eckpunkte
- 8-11: Sensoren
- 12: Hand
- 13: Unterarm
- 14-17: Schwerpunktpositionen
- 18-21: Unterräume
- 22: Kontaktpunkt der Unterräume
- 23: Mitte der Anzeigefläche
- 24-27: Versätze
- 31: Kraftfahrzeug
- 32: Bedienelement
- 33: Schwerpunktposition
- 34: Nutzer
- 35: Körper
- 36: Positionsbestimmungsvorrichtung
- 45: Signalgeber
- 46: Fahrersitz
- 47: Auswerte- und Steuereinheit
- 48: weiterer Signalgeber
- 49: Beifahrersitz
- 50: Schwerpunktpositionsermittlungsmodul
- 51: Speicher
- 52: Betätigungselementpositionsberechnungsmodul
- 53: Fingerposition
- 54: Vergleichsmodul
- 55: Versatz
- 56: Korrekturmodul
- 57: Versatzberechnungsmodul
- 58: Zuordnungsmodul
- 59: Identifikationsmodul
- 61: obere Kante
- 62: linker Rand
- 63: Berührungsposition
- 64: rechter Rand

## Patentansprüche

1. Verfahren zum Bestimmen der Position eines Betätigungselements (1) eines Nutzers (34) in einem Kraftfahrzeug (31) bei einer Annäherung eines das Betätigungselement (1) umfassenden Objekts (12, 13) des Nutzers (34) an eine Fläche (6) umfassend folgende Schritte:
Erfassen von Sensorsignalen berührungslos messender Sensoren (8-11), wobei die Sensorensignale jeweils ein Maß für einen Abstand des Objekts (12, 13) von einer entsprechenden Sensorposition sind, und
Ermitteln der Position des Betätigungselements (1) anhand der Sensorsignale der Sensoren (8-11), wobei anhand der Sensorsignale zunächst eine Schwerpunktposition (14-17, 33) des sich mit dem Betätigungselement (1) annähernden Objekts (12, 13) ermittelt wird,
**dadurch gekennzeichnet, dass**
die Position des Betätigungselements (1) ausgehend von der Schwerpunktposition (14-17, 33) unter Berücksichtigung eines von der Schwerpunktposition (14-17, 33) abhängigen Versatzes (24-27, 55) ermittelt wird, wobei der Versatz (24-27, 55) vorbestimmt ist oder aus vorbestimmten Versätzen abhängig von der Schwerpunktposition (14-17, 33) berechenbar ist.

2. Verfahren nach Anspruch 1, **dadurch gekennzeichnet, dass** das Erfassen der Sensorsignale folgende Schritte umfasst:
Erzeugen eines HF-Signals;
Einkoppeln des HF-Signals in den Nutzer (34);
Übertragen des HF-Signals über den Körper (35) des Nutzers (34);
Empfangen des über den Körper (35) und das Betätigungselement des Nutzers (34) übertragenen HF-Signals mittels der Sensoren (8-11),
wobei die Sensorsignale jeweils ein Maß für die empfangene Signalstärke des HF-Signals sind.

3. Verfahren nach einem der Ansprüche 1 bis 2, **dadurch gekennzeichnet, dass** der Raum vor der Fläche in Unterräume (18-21) unterteilt wird und jedem Unterraum (18-21) ein Versatz (24-27, 55) zugeordnet ist.

4. Verfahren nach einem der Ansprüche 1 bis 3, **dadurch gekennzeichnet, dass** der Versatz (24-27, 55) mittels einer Funktion der Schwerpunktposition (14-17, 33) berechnet wird.

5. Verfahren nach einem der Ansprüche 1 bis 4, **dadurch gekennzeichnet, dass** Zuordnungen empfangener Signalstärken zu ermittelten Entfernungen des Betätigungselements von den entsprechenden Sensoren (8-11) für die Berechnung der Position des Betätigungselements (1) jeweils individuell abhängig von der ermittelten Schwerpunktposition (14-17, 33) angepasst werden.

6. Verfahren nach einem der Ansprüche 1 bis 5, **dadurch gekennzeichnet, dass** zusätzlich mindestens eine während der Annäherung zuvor ermittelte Schwerpunktposition in die Ermittlung der Betätigungselementpositionen einbezogen wird.

7. Verfahren nach einem der Ansprüche 1 bis 6, **dadurch gekennzeichnet, dass** die Fläche ein Touchscreen ist und mittels des Touchscreens eine Berührposition (2-5) bei einer Berührung des Touchscreens durch das Betätigungselement ermittelt und bereitgestellt wird, und die Berührposition (2-5) mit der ermittelten Position des Betätigungselements verglichen wird, und anhand einer Abweichung der Versatz (24-27, 55) und/oder die Zuordnung der Signalstärken zu den Entfernungen korrigiert werden.

8. Verfahren nach einem der Ansprüche 1 bis 7, **dadurch gekennzeichnet, dass** der Versatz und/oder die Zuordnungen personenbezogen gespeichert werden.

9. Verfahren nach einem der Ansprüche 1 bis 8, **dadurch gekennzeichnet, dass** zusätzlich ein weiteres HF-Signal erzeugt wird, das in einen weiteren Nutzer eingekoppelt wird und die Sensoren (8-11) oder weitere Sensoren weitere Sensorsignale bereitstellen, die jeweils ein Maß für eine empfangene Signalstärke des weiteren über den weiteren Körper und ein weiteres Betätigungselement des weiteren Nutzers übertragenen HF-Signals angeben, und wobei anhand der weiteren Sensorsignale zunächst eine weitere Schwerpunktposition eines mit dem weiteren Betätigungselement angenäherten weiteren Objekts ermittelt wird und eine weitere Betätigungselementposition unter Berücksichtigung der weiteren Schwerpunktposition ermittelt wird.

10. Positionsbestimmungsvorrichtung (36) eines Kraftfahrzeugs (31) zum Ermitteln der Position eines Betätigungselements (1) eines Nutzers (34) im dreidimensionalen Raum bei einer Annäherung eines das Betätigungselement (1) umfassenden Objekts (12, 13) des Nutzers (34) an eine Fläche (6), umfassend berührungslos messende Sensoren (8-11), die Sensorsignale erzeugen, die jeweils ein Maß für einen Abstand des Objekts (12, 13) von einer entsprechenden Sensorposition sind, und eine Auswerte- und Steuereinheit (47), die anhand der Sensorsignale der Sensoren (8-11) eine Position des Betätigungselements (1) relativ zu der Fläche (6) errechnet, wobei die Auswerte- und Steuereinheit (47) ein Schwerpunktpositionsermittlungsmodul (50) umfasst, mit dem anhand der Sensorsignale zunächst eine Schwerpunktposition (14-17, 33) des sich mit dem Betätigungselement (1) annähernden Objekts (12, 13) ermittelbar ist,
**dadurch gekennzeichnet, dass**
die Auswerte- und Steuereinheit (47) zusätzlich ein Betätigungselementpositionsberechnungsmodul (52) umfasst, mit dem unter Berücksichtigung der Schwerpunktposition (14-17, 33) die Position des Betätigungselements (1) errechenbar ist, wobei das Betätigungselementpositionsberechungsmodul (52) ausgebildet ist, die Position des Betätigungselements (1) ausgehend von der Schwerpunktposition (14-17,33) unter Berücksichtigung eines von der Schwerpunktposition (14-17,33) abhängigen Versatzes (24-27, 55) zu ermitteln, und wobei der Versatz (24-27, 55) vorbestimmt ist oder aus vorbestimmten Versätzen abhängig von der Schwerpunktposition (14-17, 33) berechenbar ist.

11. Positionsbestimmungsvorrichtung (36) nach Anspruch 10, **dadurch gekennzeichnet, dass** das Betätigungselementpositionsberechungsmodul (52) ein Zuordnungsmodul (58) umfasst, mit dem Zuordnungen empfangener Signalstärken zu ermittelten Entfernungen des Betätigungselements von dem entsprechenden Sensor (8-11) für die Berechnung der Position des Betätigungselements (1) jeweils individuell abhängig von der ermittelten Schwerpunktposition (14-17, 33) anpassbar sind.

12. Positionsbestimmungsvorrichtung (36) nach einem der Ansprüche 10 oder 11, **dadurch gekennzeichnet, dass** die Fläche ein Touchscreen ist und die Auswerte- und Steuereinheit (47) ausgebildet ist, eine mittels des Tochscreens bei einer Berührung des Touchscreens durch das Betätigungselement ermittelte und bereitgestellte Berührposition zu empfangen, und ein Vergleichsmodul (54) zum Bestimmen einer Abweichung der Berührposition der ermittelten Position des Betätigungselements und ein Korrekturmodul (56) umfasst, um den Versatz und/oder die Zuordnung der Signalstärken zu den Entfernungen zu korrigieren.

13. Positionsbestimmungsvorrichtung (36) nach einem der Ansprüche 10 bis 12, **gekennzeichnet durch** einen Signalgeber (45) zum Erzeugen eines hochfrequenten Gebersignals,
wobei der Signalgeber (45) angeordnet ist, das Gebersignal kapazitiv oder leitend in einen Körper (35) des Nutzers (34) einzukoppeln; und die Sensoren (8-11) ausgebildet sind, das in den Körper (35) eingekoppelte, über diesen Körper (35) und das Betätigungselement hiervon übertragene Gebersignal kapazitiv zu empfangen, wobei die Sensorsignale der Sensoren (8-11) jeweils ein Maß für die empfangene Signalstärke sind.

## Claims

1. Method for determining the position of an actuation element (1) of a user (34) in a motor vehicle (31) as an object (12, 13) of the user (34), which comprises the actuation element (1), approaches a surface (6), comprising the following steps of:
capturing sensor signals from contactlessly measuring sensors (8-11), the sensor signals each being a measure of a distance between the object (12, 13) and a corresponding sensor position, and determining the position of the actuation element (1) on the basis of the sensor signals from the sensors (8-11), a centre of gravity position (14-17, 33) of the object (12, 13) approaching with the actuation element (1) first of all being determined on the basis of the sensor signals,
**characterized in that**
the position of the actuation element (1) is determined on the basis of the centre of gravity position (14-17, 33) taking into account an offset (24-27, 55) dependent on the centre of gravity position (14-17, 33), the offset (24-27, 55) being predetermined or being able to be calculated from predetermined offsets on the basis of the centre of gravity position (14-17, 33).

2. Method according to Claim 1, **characterized in that** the process of capturing the sensor signals comprises the following steps of:
generating an RF signal;
coupling the RF signal into the user (34);
transmitting the RF signal via the body (35) of the user (34);
receiving the RF signal transmitted via the body (35) and the actuation element of the user (34) by means of the sensors (8-11), the sensor signals each being a measure of the received signal strength of the RF signal.

3. Method according to either of Claims 1 and 2,
**characterized in that** the space in front of the surface is subdivided into subspaces (18-21) and an offset (24-27, 55) is assigned to each subspace (18-21).

4. Method according to one of Claims 1 to 3,
**characterized in that** the offset (24-27, 55) is calculated by means of a function of the centre of gravity position (14-17, 33).

5. Method according to one of Claims 1 to 4,
**characterized in that** assignments of received signal strengths to determined distances between the actuation element and the corresponding sensors (8-11) are each individually adapted on the basis of the determined centre of gravity position (14-17, 33) for the purpose of calculating the position of the actuation element (1).

6. Method according to one of Claims 1 to 5,
**characterized in that** at least one centre of gravity position previously determined during the approach is additionally included in the determination of the actuation element positions.

7. Method according to one of Claims 1 to 6,
**characterized in that** the surface is a touchscreen and the touchscreen is used to determine and provide a touch position (2-5) when the touchscreen is touched by the actuation element, and the touch position (2-5) is compared with the determined position of the actuation element, and the offset (24-27, 55) and/or the assignment of the signal strengths to the distances is/are corrected on the basis of a difference.

8. Method according to one of Claims 1 to 7,
**characterized in that** the offset and/or the assignments is/are stored in an individual-related manner.

9. Method according to one of Claims 1 to 8,
**characterized in that** a further RF signal which is coupled into a further user is additionally generated, and the sensors (8-11) or further sensors provide further sensor signals which each indicate a measure of a received signal strength of the further RF signal transmitted via the further body and a further actuation element of the further user, a further centre of gravity position of a further object approached with the further actuation element first of all being determined on the basis of the further sensor signals, and a further actuation element position being determined taking into account the further centre of gravity position.

10. Positioning apparatus (36) of a motor vehicle (31) for determining the position of an actuation element (1) of a user (34) in three-dimensional space when an object (12, 13) of the user (34), which comprises the actuation element (1), approaches a surface (6), comprising contactlessly measuring sensors (8-11) which generate sensor signals which are each a measure of a distance between the object (12, 13) and a corresponding sensor position, and an evaluation and control unit (47) which calculates a position of the actuation element (1) relative to the surface (6) on the basis of the sensor signals from the sensors (8-11), the evaluation and control unit (47) comprising a centre of gravity position determination module (50) which can be used to first of all determine a centre of gravity position (14-17, 33) of the object (12, 13) approaching with the actuation element (1) on the basis of the sensor signals,
**characterized in that**
the evaluation and control unit (47) additionally comprises an actuation element position calculation module (52) which can be used to calculate the position of the actuation element (1) taking into account the centre of gravity position (14-17, 33), the actuation element position calculation module (52) being designed to determine the position of the actuation element (1) on the basis of the centre of gravity position (14-17, 33) taking into account an offset (24-27, 55) dependent on the centre of gravity position (14-17, 33), and the offset (24-27, 55) being predetermined or being able to be calculated from predetermined offsets on the basis of the centre of gravity position (14-17, 33).

11. Positioning apparatus (36) according to Claim 10,
**characterized in that** the actuation element position calculation module (52) comprises an assignment module (58) which can be used to respectively individually adapt assignments of received signal strengths to determined distances between the actuation element and the corresponding sensor (8-11) on the basis of the determined centre of gravity position (14-17, 33) for the purpose of calculating the position of the actuation element (1).

12. Positioning apparatus (36) according to either of Claims 10 and 11, **characterized in that** the surface is a touchscreen, and the evaluation and control unit (47) is designed to receive a touch position determined and provided by means of the touchscreen when the touchscreen is touched by the actuation element, and comprises a comparison module (54) for determining a difference between the touch position and the determined position of the actuation element and a correction module (56) for correcting the offset and/or the assignment of the signal strengths to the distances.

13. Positioning apparatus (36) according to one of Claims 10 to 12,
**characterized by** a signal generator (45) for generating a radio-frequency generator signal, the signal generator (45) being arranged to capacitively or conductively couple the generator signal into a body (35) of the user (34), and the sensors (8-11) being designed to capacitively receive the generator signal coupled into the body (35) and transmitted via this body (35) and the actuation element thereof, the sensor signals from the sensors (8-11) each being a measure of the received signal strength.

## Revendications

1. Procédé pour déterminer la position d'un élément d'actionnement (1) d'un utilisateur (34) dans un véhicule automobile (31) lorsqu'un objet (12, 13) de l'utilisateur (34), comprenant l'élément d'actionnement (1), s'approche d'une surface (6), comprenant les étapes consistant à :
détecter des signaux de capteurs provenant de capteurs de mesure sans contact (8-11), dans lequel les signaux de capteurs sont respectivement une mesure d'une distance de l'objet (12, 13) par rapport à une position de capteur correspondante, et
déterminer la position de l'élément d'actionnement (1) sur la base des signaux de capteurs provenant des capteurs (8-11),
dans lequel une position de centre de gravité (14-17, 33) de l'objet (12, 13) se rapprochant de l'élément d'actionnement (1) est tout d'abord déterminée sur la base des signaux de capteurs,
**caractérisé en ce que** la position de l'élément d'actionnement (1) est déterminée à partir de la position du centre de gravité (14-17, 33) en tenant compte d'un décalage (24-27, 55) dépendant de la position du centre de gravité (14-17, 33), dans lequel le décalage (24-27, 55) est prédéterminé ou peut être calculé à partir de décalages prédéterminés en fonction de la position du centre de gravité (14-17, 33).

2. Procédé selon la revendication 1, **caractérisé en ce que** la détection des signaux de capteurs comprend les étapes consistant à :
générer un signal HF ;
injecter le signal HF dans l'utilisateur (34) ;
transmettre le signal HF par le biais du corps (35) de l'utilisateur (34) ;
recevoir le signal HF transmis par le biais du corps (35) et de l'élément d'actionnement de l'utilisateur (34) au moyen des capteurs (8-11),
dans lequel les signaux de capteurs sont respectivement une mesure de l'intensité de signal reçue du signal HF.

3. Procédé selon l'une des revendications 1 et 2, **caractérisé en ce que** l'espace situé à l'avant de la surface est subdivisé en sous-espaces (18-21) et **en ce qu'**un décalage (24-27, 55) est associé à chaque sous-espace (18-21).

4. Procédé selon l'une des revendications 1 à 3, **caractérisé en ce que** le décalage (24-27, 55) est calculé au moyen d'une fonction de la position du centre de gravité (14-17, 33).

5. Procédé selon l'une des revendications 1 à 4, **caractérisé en ce que** des associations d'intensités de signal reçues à des distances déterminées de l'élément d'actionnement par rapport aux capteurs (8-11) correspondants sont respectivement individuellement adaptées pour le calcul de la position de l'élément d'actionnement (1) en fonction de la position déterminée du centre de gravité (14-17, 33).

6. Procédé selon l'une des revendications 1 à 5, **caractérisé en ce qu'**au moins une position du centre de gravité préalablement déterminée pendant l'approche est en outre prise en compte lors de la détermination des positions de l'élément d'actionnement.

7. Procédé selon l'une des revendications 1 à 6, **caractérisé en ce que** la surface est un écran tactile et **en ce qu'**une position de contact (2-5) est déterminée et est fournie au moyen de l'écran tactile lorsque l'écran tactile est touché par l'élément d'actionnement, **en ce que** la position de contact (2-5) est comparée à la position déterminée de l'élément d'actionnement et **en ce que** le décalage (24-27, 55) et/ou l'association entre les intensités de signal et les distances sont corrigés sur la base d'un écart.

8. Procédé selon l'une des revendications 1 à 7, **caractérisé en ce que** le décalage et/ou les associations sont stockés en fonction des personnes.

9. Procédé selon l'une des revendications 1 à 8, **caractérisé en ce qu'**un autre signal HF est en outre généré, celui-ci étant injecté dans un autre utilisateur et **en ce que** les capteurs (8-11) ou d'autres capteurs fournissent d'autres signaux de capteurs qui donnent une mesure d'une intensité de signal reçue dudit autre signal HF transmis par le biais de l'autre corps et d'un autre élément d'actionnement de l'autre utilisateur, et dans lequel une autre position de centre de gravité d'un autre objet se rapprochant de l'autre élément d'actionnement est déterminée en premier lieu sur la base des autres signaux de capteurs et **en ce qu'**une autre position d'élément d'actionnement est déterminée en tenant compte de l'autre position du centre de gravité.

10. Dispositif de détermination de position (36) d'un véhicule automobile (31), destiné à déterminer la position d'un élément d'actionnement (1) d'un utilisateur (34) dans un espace tridimensionnel lorsqu'un objet (12, 13) de l'utilisateur (34) s'approche d'une surface (6), comprenant l'élément d'actionnement (1), comprenant des capteurs de mesure sans contact (8-11) générant des signaux de capteurs qui sont respectivement une mesure d'une distance de l'objet (12, 13) par rapport à une position de capteur correspondante, et une unité d'évaluation et de commande (47) qui calcule une position de l'élément d'actionnement (1) par rapport à la surface (6) sur la base des signaux de capteurs provenant des capteurs (8-11),
dans lequel l'unité d'évaluation et de commande (47) comprend un module de détermination de position de centre de gravité (50) permettant de déterminer en premier lieu une position de centre de gravité (14-17, 33) de l'objet (12, 13) se rapprochant de l'élément d'actionnement (1) sur la base des signaux de capteurs, **caractérisé en ce que** l'unité d'évaluation et de commande (47) comprend en outre un module de calcul de position d'élément d'actionnement (52) permettant de calculer la position de l'élément d'actionnement (1) en tenant compte de la position du centre de gravité (14-17, 33), dans lequel le module de calcul de position d'élément d'actionnement (52) est conçu pour déterminer la position de l'élément d'actionnement (1) à partir de la position du centre de gravité (14-17, 33) en tenant compte d'un décalage (24-27, 55) dépendant de la position du centre de gravité (14-17, 33), et dans lequel le décalage (24-27, 55) est prédéterminé ou peut être calculé à partir de décalages prédéterminés en fonction de la position du centre de gravité (14-17, 33).

11. Dispositif de détermination de position (36) selon la revendication 10, **caractérisé en ce que** le module de calcul de position d'élément d'actionnement (52) comprend un module d'association (58) permettant d'adapter des associations d'intensités de signal reçues à des distances déterminées de l'élément d'actionnement par rapport aux capteurs (8-11) correspondants pour le calcul individuel respectif de la position de l'élément d'actionnement (1) en fonction de la position déterminée du centre de gravité (14-17, 33).

12. Dispositif de détermination de position (36) selon l'une des revendications 10 ou 11, **caractérisé en ce que** la surface est un écran tactile et **en ce que** l'unité d'évaluation et de commande (47) est conçue pour recevoir et fournir une position de contact déterminée au moyen de l'écran tactile lorsque l'écran tactile est touché par l'élément d'actionnement, et un module de comparaison (54) destiné à déterminer un écart de la position de contact par rapport à la position déterminée de l'élément d'actionnement et comprend un module de correction (56) destiné à corriger le décalage et/ou l'association entre les intensités de signal est les distances.

13. Dispositif de détermination de position (36) selon l'une des revendications 10 à 12, **caractérisé par** un générateur de signal (45) destiné à générer un signal de générateur à haute fréquence,
dans lequel le générateur de signal (45) est conçu pour injecter de manière capacitive ou conductrice le signal du générateur dans le corps (35) de l'utilisateur (34) ; et les capteurs (8-11) sont conçus pour recevoir de manière capacitive le signal de générateur injecté dans le corps (35) et transmis par celui-ci par le biais dudit corps (35) et de l'élément d'actionnement, dans lequel les signaux de capteurs des capteurs (8-11) sont respectivement une mesure des intensités de signal reçues.
